## Europäisches Patentamt
## European Patent Office
## Office européen des brevets

(19)

(11) Veröffentlichungsnummer: **0 115 074**
**B1**

(12) # EUROPÄISCHE PATENTSCHRIFT

(45) Veröffentlichungstag der Patentschrift:
**11.05.88**

(51) Int. Cl.⁴: **G 01 L 13/02,** G 01 L 9/06

(21) Anmeldenummer: **83113139.6**

(22) Anmeldetag: **27.12.83**

(54) **Druckdifferenz-Messeinrichtung.**

(30) Priorität: **29.12.82 JP 232865/82**

(43) Veröffentlichungstag der Anmeldung:
**08.08.84 Patentblatt 84/32**

(45) Bekanntmachung des Hinweises auf die Patenterteilung:
**11.05.88 Patentblatt 88/19**

(84) Benannte Vertragsstaaten:
**DE FR GB NL**

(56) Entgegenhaltungen:
**EP - A - 0 007 596**
**US - A - 4 065 970**

**PATENTS ABSTRACTS OF JAPAN, Band 4, Nr. 39**
**(P-4)[521], 28. März 1980; & JP - A - 55 10 585**
**(MATSUSHITA DENKI SANGYO K.K.)**
**PATENTS ABSTRACTS OF JAPAN, Band 5, Nr. 192**
**(E-85)[864], 8. Dezember 1981; & JP - A - 56 114 378**
**(HITACHI SEISAKUSHO K.K.) 08.09.1981**

(73) Patentinhaber: **FUJI ELECTRIC CO. LTD., 1-1,**
**Tanabeshinden, Kawasaki-ku, Kawasaki 210 (JP)**

(72) Erfinder: **Takeshi, Yasuhara, Dipl. Ing.,**
**Asagayakita 4-7-20 Suginami-Ku, Tokyo (JP)**

(74) Vertreter: **Mehl, Ernst, Dipl.-Ing. et al, Postfach 22 01 76,**
**D-8000 München 22 (DE)**

**Beschreibung**

Es ist eine Druckdifferenz-Messeinrichtung bekannt (Druckschrift PDS 2110G der Firma Rosemount Engineering GmbH), bei der eine Messmembrananordnung aus einer Messmembran besteht, die der Druckdifferenz entsprechend ausgelenkt wird. Die Messmembrananordnung ist zwischen zwei Grundkörpern unter Bildung einer ersten und einer zweiten Messkammer eingespannt. Die Grundkörper weisen bei der bekannten Messeinrichtung Isolierkörper auf, auf denen Kondensatorplatten aufgebracht sind. Auf der von der Messmembrananordnung abgewandten Seite der Grundkörper befindet sich jeweils eine Trennmembran, die jeweils eine Druckkammer begrenzt. In Durchgangslöchern in den Grundkörpern sowie in den Mess- und Druckkammern ist eine Druckübertragungsflüssigkeit eingefüllt. Die bekannte Druckdifferenz-Messeinrichtung arbeitet nach dem Prinzip des Differentialkondensators. Diese Differentialkondensatoren bedingen einen relativ hohen Fertigungsaufwand.

Es ist ferner eine Halbleiterscheibe zur Druckmessung bekannt (Patents Abstracts of Japan, Band 4, Nr. 39 (P-4) [521], 28. März 1980), die einen mittleren, membranartig verdünnten Bereich mit messwerterfassenden Teilen aufweist; dieser Bereich ist durch eine von der einen Seite der Halbleiterscheibe eingebrachte Ausnehmung gebildet. In der Nähe ihres einspannbaren Randes ist die Halbleiterscheibe mit einer ringförmigen Nut versehen, die von derselben Seite der Halbleiterscheibe aus eingebracht ist.

Stellt sich die Aufgabe, eine Druckdifferenz-Messeinrichtung vorzuschlagen, die sich verhältnismässig einfach herstellen lässt und sich trotz der vereinfachten Herstellung durch eine geringe Fehlerabhängigkeit bei Temperaturänderungen und äusseren mechanischen Beanspruchungen auszeichnet, dann könnte man daran denken, die obenbeschriebene bekannte Druckdifferenz-Messeinrichtung mit einer Messmembrananordnung aus einer Halbleiterscheibe zu versehen, wie sie in den erwähnten Patents Abstracts of Japan beschrieben ist. Eine derartige Druckdifferenz-Messeinrichtung lässt aber hinsichtlich des Fehlerverhaltens immer noch Wünsche offen.

Die Erfindung geht daher aus von einer Druckdifferenz-Messeinrichtung mit einer Messmembrananordnung aus einer Halbleiterscheibe, die zwischen zwei Grundkörpern unter Bildung einer ersten und einer zweiten Messkammer eingespannt ist, mit zwei Trennmembranen, die auf der von der Halbleiterscheibe abgewandten Seite der Grundkörper jeweils eine Druckkammer bilden, mit Durchgangslöchern in den Grundkörpern zur Verbindung der jeweils auf einer Seite der Halbleiterscheibe liegenden Mess- und Druckkammer untereinander und mit einer Druckübertragungsflüssigkeit in den Mess- und Druckkammern sowie in den Durchgangslöchern, wobei die Halbleiterscheibe einen mittleren, membranartig verdünnten Bereich erhält, in dem sich messwerterfassende Teile befinden und der durch eine von der einen Seite der Halbleiterscheibe eingebrachte Ausnehmung gebildet ist, und in der Nähe des eingespannten Bereichs eine ringförmige Nut aufweist, und stellt sich die Aufgabe, die Messeinrichtung so auszugestalten, dass sie sich durch eine sehr geringe Fehlerabhängigkeit bei Temperaturänderungen und Änderungen des statischen Druckes auszeichnet.

Zur Lösung dieser Aufgabe ist bei einer Druckdifferenz-Messeinrichtung der oben angegebenen Ausführung erfindungsgemäss die ringförmige Nut zu der anderen Seite der Halbleiterscheibe hin offen.

Es ist zwar eine Messeinrichtung mit einer Halbleiterscheibe mit einem membranartig verdünnten Bereich bekannt («Hitachi Review» Vol. 30 (1981) 6, S. 286), jedoch handelt es sich bei dieser Messeinrichtung um eine Druckmessanordnung mit einem von der erfindungsgemässen Druckdifferenz-Messeinrichtung stark unterschiedlichen konstruktiven Aufbau; auch weist die Halbleiterscheibe der bekannten Einrichtung keine ringförmige Nut auf.

Ferner ist ein Halbleiter-Drucksensor bekannt (Patents Abstracts of Japan, Band 5, Nr. 192 (E-85) [864], 8. Dezember 1981), der in seinem mittleren Bereich verdünnt ist; dieser mittlere Bereich ist von einer Ringnut umgeben, durch die das Halbleiter-Material membranartig verdünnt ist. In dem membranartig verdünnten Ringbereich befinden sich messwerterfassende Elemente. Der bekannte Drucksensor stellt somit einen Ringmembranaufbau dar, für den bezüglich des Fehlerverhaltens andere Verhältnisse als beim erfindungsgemässen Messgerät vorliegen.

Ein Vorteil der erfindungsgemässen Druckdifferenz-Messeinrichtung besteht darin, dass durch die von der anderen Seite der Halbleiterscheibe eingebrachte ringförmige Nut in radialer Richtung auf die Halbleiterscheibe ausgeübte Zugspannungen besonders gut absorbiert werden. Diese Zugspannungen treten bei Temperaturänderungen auf, weil dabei – beispielsweise im Falle einer Temperaturerhöhung – aufgrund der Ausdehnung der Grundkörper mechanische Beanspruchung auf die Halbleiterscheibe übertragen werden. Eine entsprechende mechanische Belastung auf die Halbleiterscheibe würde ohne die ringförmige Nut bei Änderungen des statischen Andruckes auftreten, weil auch in diesem Falle die Grundkörper zusammen mit einem sie gegebenenfalls umfassenden Haltekörper nach aussen gedrückt werden. Die Absorption von radial auf die Halbleiterscheibe einwirkenden Kräften ist also allein durch die ringförmige Nut bewirkt, so dass zusätzliche Massnahmen zur Kompensation dieser unerwünschten mechanischen Beanspruchungen nicht erforderlich sind.

Bei einer besonders vorteilhaften Ausführungsform der erfindungsgemässen Druckdifferenz-Messeinrichtung ist zwischen dem membranartig verdünnten Bereich der Halbleiterscheibe und ihrer ringförmigen Nut eine ringförmige Ausnehmung vorhanden. Diese ringförmige Ausnehmung bewirkt einen Schutz der Halbleiterscheibe bei Überlastbedingungen. Dabei hat es sich als vorteilhaft erwiesen, wenn die ringförmige Ausnehmung von der einen Seite der Halbleiterscheibe eingebracht ist, also auf derselben Seite wie die den membranartig verdünnten Bereich der Halbleiterscheibe bildende Ausnehmung liegt.

Zur Erläuterung der Erfindung ist in

Figur 1 ein Schnitt durch ein Ausführungsbeispiel der erfindungsgemässen Druckdifferenz-Messeinrichtung, in

Figur 2 ein Schnitt durch die die Messmembrananordnung bildende Halbleiterscheibe, in

Figur 3 eine Aufsicht auf eine Seite der Halbleiterscheibe und in

Figur 4 eine Aufsicht auf die andere Seite der Halbleiterscheibe wiedergegeben.

Die dargestellte Druckdifferenz-Messeinrichtung 1 enthält eine eine Messmembrananordnung bildende Halbleiterscheibe 2 sowie einen ersten Grundkörper 3 und einen zweiten Grundkörper 4. Diese Grundkörper sind von einem Haltekörper 5 umfasst. Ferner enthält die dargestellte Druckdifferenz-Messeinrichtung eine erste Trennmembran 6 und eine zweite Trennmembran 7, die von einer ersten Druckkappe 8 und einer zweiten Druckkappe 9 abgedeckt sind.

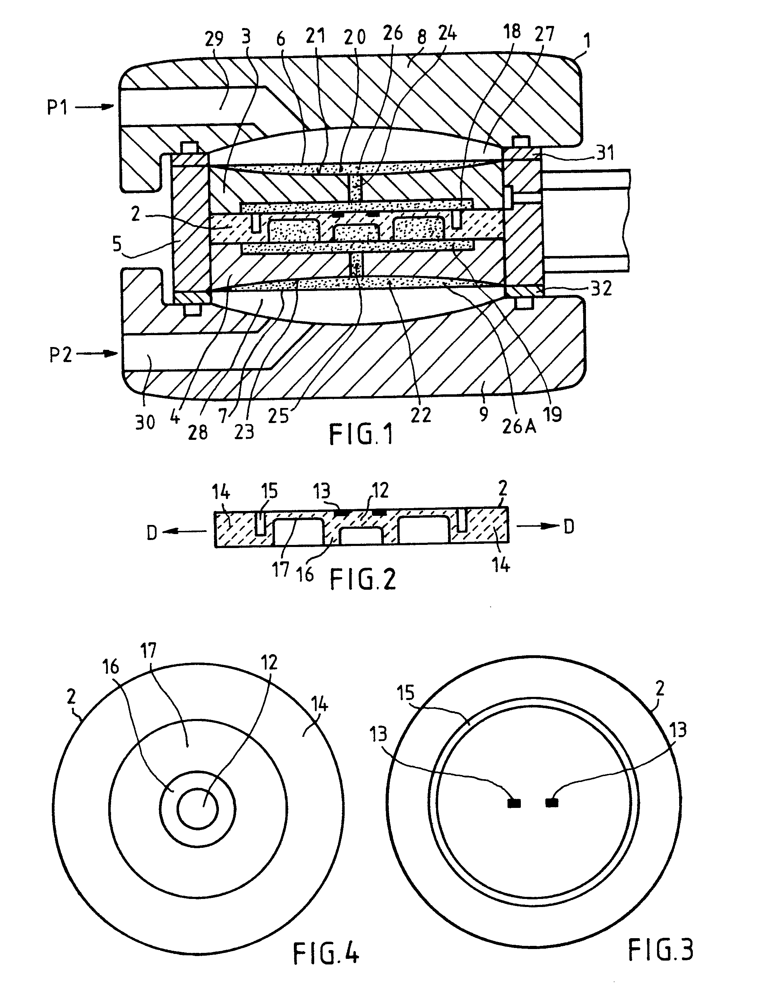

Die Halbleiterscheibe 2 besteht aus monokristallinem Silizium und weist einen mittleren Bereich 12 auf (vgl. Fig. 2), der membranartig verdünnt ist. Messwerterfassende Teile sind in Form einer Spannungsmesseinrichtung 13 durch Diffusion auf der einen Seite des mittleren Bereiches 12 angeordnet. Ein eingespannter Bereich 14 bildet einen äusseren Teil der Halbleiterscheibe 2 und ist zwischen dem ersten und dem zweiten Grundkörper 3 und 4 befestigt. In dem eingespannten Bereich 14 der Halbleiterscheibe 2 bzw. am inneren Rand des eingespannten Bereichs befindet sich eine ringförmige Nut 15, die somit gewissermassen den Übergang des eingespannten Bereichs 14 zu dem übrigen Bereich der Halbleiterscheibe darstellt. Ein ringförmiger, dicker Bereich 16 und ein ringförmiger, in der Stärke reduzierter Bereich 17 sind konzentrisch angeordnet und liegen zwischen dem mittleren, membranartig verdünnten Bereich 12 und dem eingespannten Bereich 14 der Halbleiterscheibe 2.

Die Halbleiterscheibe 2 der oben beschriebenen Ausführung ist zwischen dem ersten und dem zweiten Grundkörper 3 und 4 so angeordnet, dass sie den Raum zwischen den inneren Oberflächen der beiden Grundkörper 3 und 4 in eine erste Messkammer 18 und in eine zweite Messkammer 19 unterteilt. Die Halbleiterscheibe 2 und die beiden Grundkörper 3 und 4 sind fest mit dem Haltekörper 5 verbunden, beispielsweise verschweisst.

Eine erste Druckkammer 20 ist von der ersten Trennmembran 6 und der äusseren Oberfläche 21 des ersten Grundkörpers 3 gebildet, während eine zweite Druckkammer 22 von der zweiten Trennmembran 7 und der äusseren Oberfläche 23 des zweiten Grundkörpers 4 umschlossen ist. Ein erstes Durchgangsloch 24 ist in dem ersten Grundkörper 3 vorgesehen, damit die erste Druckkammer 20 mit der ersten Messkammer 18 in Verbindung steht; über ein zweites Durchgangsloch 25 in dem zweiten Grundkörper 4 ist eine Verbindung zwischen der zweiten Druckkammer 22 und der zweiten Messkammer 19 geschaffen. Eine Druckübertragungsflüssigkeit 26 ist in der ersten Messkammer 18 der ersten Druckkammer 20 und dem ersten Durchgangsloch 24 eingeschlossen, während eine weitere Druckflüssigkeit 26A sich in der zweiten Messkammer 19, der zweiten Druckkammer 22 und dem zweiten Durchgangsloch 25 befindet.

Die erste Druckkappe 8 und zweite Druckkappe 9 enthalten jeweils eine Druckaufnahmekammer 27 bzw. 28 sowie Druckzuführungsöffnungen 29 bzw. 30, durch die Drücke P1 und P2 den Druckaufnahmekammern 27 und 28 zugeführt werden. Befestigungsringe 31 bzw. 32 sichern die Trennmembranen 6 und 7 an dem Haltekörper 5.

Die oben beschriebene Druckdifferenz-Messeinrichtung arbeitet in folgender Weise:

Die den Druckaufnahmekammern 27 und 28 zugeführten Drücke P1 und P2 werden über die beiden Trennmembranen 6 und 7 exakt auf die Druckübertragungsflüssigkeiten 26 und 26A übertragen. Da diese Flüssigkeiten inkompressibel sind, werden von ihnen die Drücke P1 und P2 auf die Halbleiterscheibe 2 übertragen, dadurch ist in vorteilhafter Weise die Halbleiterscheibe 2 vor schädlichen Einwirkungen der die Drücke P1 und P2 aufweisenden Flüssigkeiten und vor atmosphärischen Gasen geschützt. Die Halbleiterscheibe 2 erfasst die Druckdifferenz P1–P2 in Form einer Widerstandsänderung der messwerterfassenden Teile 13 aufgrund eines Piezoeffektes.

Da sich der Haltekörper 5 aufgrund der Beaufschlagung mit den hohen Messdrücken P1 und P2 in radialer Richtung ausdehnt und weil der thermische Ausdehnungskoeffizient des Haltekörpers 5 grösser ist als der der Halbleiterscheibe 2, wird auf diese eine mechanische Beanspruchung in der radialen Richtung D ausgeübt. Die ringförmige Nut 15 im eingespannten Bereich 14 der Halbleiterscheibe 2 absorbiert diese Beanspruchung der Halbleitscheibe 2 und bewahrt die messwerterfassenden Teile 13 in dem mittleren, membranartig verdünnten Bereich 12 der Halbleiterscheibe vor unerwünschten Auswirkungen dieser Beanspruchung. Auf diese Weise kann die sogenannte statische Druckcharakteristik und die Temperaturcharakteristik wesentlich verbessert werden.

Bei Überlastbedingungen, die durch eine sehr hohe Druckdifferenz P1–P2 (P1 > P2) verursacht sind, wird der in der Stärke reduzierte Bereich 17 der Halbleiterscheibe 2 stark deformiert, wodurch das Volumen der ersten Messkammer 18 verändert wird. Die eingeschlossene Druckübertragungsflüssigkeit 26 in der ersten Druckkammer 20 wird in die erste Messkammer 18 über das Durchgangsloch 24 gedrückt, so dass die Trennmembran 6 sich gegen die äussere Oberfläche 21 des ersten Grundkörpers 3 legt und dadurch eine weitere Übertragung des Druckes P1 auf die erste Messkammer 18 verhindert. Mit anderen Worten, der in der Stärke reduzierte Bereich 17 schützt die Halbleiterscheibe 2 vor Überlastung. Der ringförmig verdickte Bereich 16, der ausserhalb des mittleren, membranartig verdünnten Bereiches 12 liegt, erlaubt normale Deformationscharakteristik der messwerterfassenden Teile bzw. Spannungsmesseinrichtung 13 unbeachtlich der Deformation des eingespannten Teils 14 in Richtung D und einer zu starken Durchbiegung des in der Stärke reduzierten Bereiches 17.

Es zeigt sich also, dass bei der erfindungsgemässen Druckdifferenz-Messeinrichtung mit dem membranartig verdünnten, mittleren Bereich in der Mitte der Halbleiterscheibe die ringförmige Nut in der Halbleiterscheibe die Funktion hat, radiale Beanspruchungen zu absorbieren, so dass sie ohne Einfluss auf das Messergebnis bleiben. Der ringförmig in seiner Stärke reduzierte Bereich zwischen dem mittleren, membranartig verdünnten Bereich und dem eingespannten Bereich der Halbleiterscheibe absorbiert aufgrund einer Deformation des in der Stärke reduzierten Bereichs Überlastbeanspruchungen der Halbleiterscheibe, wodurch eine Druckdifferenz-Messeinrichtung hoher Genauigkeit, hoher Zuverlässigkeit, einfacher Konstruktion und insgesamt verringerter Grösse gewonnen ist.

**Patentansprüche**

1. Druckdifferenz-Messeinrichtung
mit einer Messmembrananordnung aus einer Halbleiterscheibe (2), die zwischen zwei Grundkörpern (3, 4) unter Bildung einer ersten und einer zweiten Messkammer (18 bzw. 19) eingespannt ist,
mit zwei Trennmembranen (6, 7), die auf der von der Halbleiterscheibe (2) abgewandten Seite der Grundkörper (3, 4) jeweils eine Druckkammer (20, 22) bilden,
mit Durchgangslöchern (24, 25) in den Grundkörpern (3, 4) zur Verbindung der jeweils auf einer Seite der Halbleiterscheibe (2) liegenden Mess- und Druckkammer (18, 20; 19, 22) untereinander und
mit einer Druckübertragungsflüssigkeit (26A) in den Mess- und Druckkammern (18, 20; 19, 22) sowie in den Durchgangslöchern (24, 25),
wobei die Halbleiterscheibe (2) einen mittleren, membranartig verdünnten Bereich (12) enthält,
in dem sich messwerterfassende Teile (13) befinden und der durch eine von der einen Seite der Halbleiterscheibe (2) eingebrachten Ausnehmung gebildet ist,
und in der Nähe des eingespannten Bereichs (14) eine ringförmige Nut (15) aufweist,
dadurch gekennzeichnet, dass die ringförmige Nut (15) zu der anderen Seite der Halbleiterscheibe (2) hin offen ist.
2. Druckdifferenz-Messeinrichtung nach Anspruch 1, dadurch gekennzeichnet, dass zwischen dem membranartig verdünnten Bereich (12) der Halbleiterscheibe (2) und ihrer ringförmigen Nut (15) unter Bildung einer ringförmigen Ausnehmung ein ringförmiger, dicker Bereich (16) und ein ringförmiger, in der Stärke reduzierter Bereich (17) liegen.

3. Druckdifferenz-Messeinrichtung nach Anspruch 2, dadurch gekennzeichnet, dass die ringförmige Ausnehmung von der einen Seite der Halbleiterscheibe (2) eingebracht ist.

**Claims**

1. A pressure-difference measuring device comprising a measuring membrane arrangement composed of a semi-conductor wafer (2) which is clamped between two basic components (3, 4) forming a first and a second measuring chamber (18 and 19),
comprising two separating membranes (6, 7) which each form a pressure chamber (20, 22) on that side of the basic components (3, 4) which faces away from the semi-conductor wafer, comprising through-bores (24, 25) in the basic components (3, 4) which serve to interconnect the measuring-and pressure chambers (18, 10; 19, 22) in each case located on one side of the semi-conductor wafer (2) and comprising a pressure transmission fluid (26A) in the measuring-and pressure chambers (18, 20; 19, 22) and in the through-bores (24, 25),
where the semi-conductor wafer (2) comprises a central, membrane-like thinned zone (12) in which measured-value-detecting components (13) are arranged and which is formed by a recess introduced from the first side of the semi-conductor wafer (2) and in the vicinity of the clamped zone (14) contains an annular groove (15),
characterised in that the annular groove (15) is open towards the other side of the semi-conductor wafer (2).
2. A pressure-difference measuring device as claimed in claim 1, characterised in that an annular, thick zone (16) and an annular zone (17) of reduced thickness are located between the membrane-like thinned zone (12) of the semi-conductor wafer and its annular groove (15) forming an annular recess.
3. A pressure-difference measuring device as claimed in claim 2, characterised in that the annular recess is formed from the first side of the semi-conductor wafer (2).

**Revendications**

1. Dispositif de mesure de différences de pression
comportant un dispositif de mesure à membrane constitué par un disque semiconducteur (2), qui est fixé par serrage entre deux corps de base (3, 4) moyennant la formation d'une première et d'une seconde chambres de mesure (18, 19), deux membranes de séparation (6, 7), qui forment des chambres de pression respectives (20, 22) sur la face des corps de base (3, 4), tournée à l'opposé du disque semiconducteur, des trous de passage (24, 25) ménagés dans les corps de base (3, 4) de manière à relier entre elles la chambre de mesure et la chambre de pression (18, 20; 19, 22) situées respectivement d'un côté du disque semiconducteur (2), et un liquide de transmission de pression (26A) situé dans les chambres de mesure et dans les chambres de pression (18, 20; 19, 22) ainsi que dans les trous de passage (24, 25), et dans lequel le disque semiconducteur (2) contient une zone centrale (12) amincie en forme de membrane, dans laquelle des éléments (13) de détection des valeurs de mesure sont situés et qui est formée par un évidement ménagé dans une face du disque semiconducteur (2), et comporte une gorge annulaire (15) à proximité de la zone (14) fixée par serrage,
caractérisé en ce que la gorge annulaire (15) s'ouvre dans l'autre face du disque semiconducteur (2).

2. Dispositif de mesure de différences de pressions suivant la revendication 1, caractérisé par le fait qu'une zone annulaire épaisse (16) et une zone annulaire d'épaisseur réduite (17) sont situées entre la zone (12), amincie en forme de membrane, du disque semiconducteur (2) et la gorge annulaire (15) ménagée dans ce dernier, en formant un évidement annulaire.

3. Dispositif de mesure de différences de pressions suivant la revendication 2, caractérisé par le fait que l'évidement annulaire est ménagé dans une face du disque semiconducteur (2).

FIG.1

FIG.2

FIG.4

FIG.3